# EUROPEAN PATENT SPECIFICATION

(11) **EP 1 189 387 B1**
(45) Date of publication and mention of the grant of the patent: **10.05.2006**
(21) Application number: 01115287.3
(22) Date of filing: 25.06.2001
(51) Int. Cl.: H04L 12/28, H04L 12/56

(54) **Method of providing bidirectional communication in a network for multicasting Internet Protocol data streams and network for applying the method**
Verfahren zur Bereitstellung einer bidirektionellen Verbindung in einem Netz für die Mehrfachübertragung von Datenströmen mit Verwendung vom Internetprotokoll und Netz für die Anwendung des Verfahrens
Méthode permettant de fournir une communication bidirectionnelle dans un réseau pour la distribution de flux de données vers multiples destinataires utilisant le protocole internet ainsi que réseau pour la mise en oeuvre de cette méthode

(30) Priority: 25.08.2000 AU 5361000
(43) Date of publication of application: 20.03.2002
(73) Proprietor: ALCATEL, 75008 Paris (FR)
(72) Inventor: Kellertuberg, Stefan Paul, Raleigh, NC 27012 (US)
(74) Representative: Rausch, Gabriele

(56) References cited:
- WO-A-98/05144
- US-A- 5 987 008
- US-A- 6 078 590

## Description

### Technical Field

This invention relates to distributing Internet Protocol (IP) multicast streams in an ATM based subscriber access node whilst minimising wasted transmission and node capacity due to forced duplication of the IP multicast streams at the network's last IP router/gateway.

### Background Art

US 6,078,590 describes a point-to-multipoint enabled network according to the preamble of claim 8.

There are no known techniques for distributing IP Multicast services using underlying ATM multicast techniques.

The existing solution requires the IP multicast to be carried through the ATM access node using conventional point to point techniques. An IP routing node needs to duplicate packets prior to transmission towards the ASAM. Duplication of multicast packets is inefficient and prevents the solution to scaling to deliver IP multicast to more than a small number of end users.

When the number of potential subscribers needing to receive the same multicast stream is large, such as when connected to a typical ADSL node with 100 to 10,000 or more subscribers, the probability of an ADSL node (or it's communications link towards the IP processing function) of exhausting its capacity is extremely high. The operator of the access node cannot effectively deliver acceptable services with such a high possibility of node congestion and will therefore be prevented from offering general multicast services to its subscribers.

### Disclosure of the invention

This specification discloses a method of providing bi-directional communication in a broadcast enabled network,
- the method including implementing packet or cell forwarding rules at end user equipments and at a multicast router to enable the separation of unidirectional downstream and bi-directional or unidirectional upstream flows.

ATM based access nodes which support ATM point to multipoint connections can be used to efficiently carry IP multicast connections if a means is implemented to carry the control part of the IP multicast connections in a point to point VP/VC and the information part of the IP multicast connection in a point to multipoint VP/VC. By this method, the solution can scale to support a very large number of end users without consuming the transport resource.
- The method shows how the ATM transport's multicast capabilities can be used to efficiently transport the IP multicast streams without the need for stream replication.

### Brief Description of the Drawings

- Figure 1: shows an example packet network architecture in a distributive packet audio service context.
- Figure 2: illustrates an example of inefficient packet distribution
- Figure 3: illustrates multicast delivery in an Subscriber Access Node without IP awareness
- Figure 4: shows control and information flow during a typical IP multicasting session
- Figure 5: shows an embodiment of the invention for efficiently supporting IP multicast on an ATM infrastructure.
- Figure 6: is a further embodiment with more than one subscriber access node served by one multicast packet router.
- Figure 7: is an another embodiment with more than one IP multicast stream available to end-users.
- Figure 8: illustrates IP multicast packet routing implemented within a subscriber access node.
- Figure 9: shows an arrangement in which subscribers access 2 or more multicast streams.

### Best Mode of Carrying out the Invention

Distributive packet network services have been being discussed and studied for a number of years. Examples of distributive packet network services include but are not limited to:
- Video Broadcast: a pay television type service delivered using a packet network.
- Audio Broadcast: similar to radio broadcast services but delivered using a packet network.

Near Video and Audio On Demand: similar to pay television or radio broadcasting but based upon a limited number of programmes which continually repeat. Multiple copies of the same programme are broadcast staggered at different starting times with a fixed starting interval between each instance of the programme. Viewers can join the transmission at any time and at most, must wait the starting interval until a new instance of the programme commences.

Information Broadcast: text based broadcast service delivered using a packet network. Key examples of such services are the various streaming stock market ticker distributions available on the Internet.

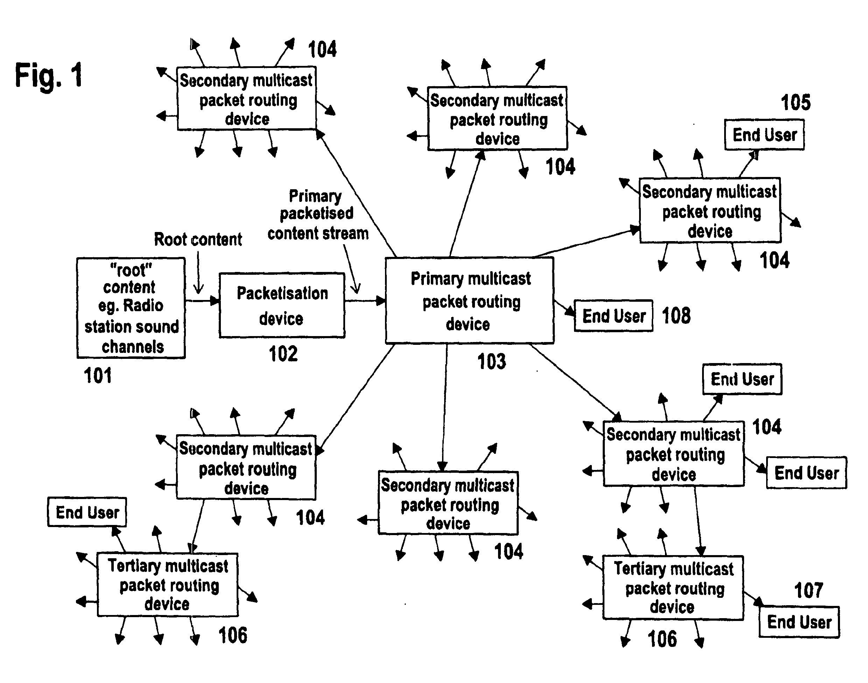

Figure 1 shows an example of a distributive audio packet service. Figure 1 shows a "root" content source, 101, eg, radio station sound channels sending root content to a packetization device, 102. The packetization device creates primary packetized content stream from the root content and forwards the primary packetized content stream to a primary multicast packet routing device, 103. Routing device 103 distributes the content stream to secondary packet routing devices, 104, or directly to end users 108. The secondary routing devices distribute the content stream to end users, 105, or to further multicast packet routing devices , eg, tertiary routing devices, 106. Further levels of subordinate packet routing may be added depending on the need, eg, end user density, geographical requirements, and so on.

Distributive packet services are often called multicast or broadcast packet services and are characterised by a single "root" source of information or "content". The root content is passed to a packetisation device which is responsible for encoding and formatting the content in a manner which is suitable to transmit the stream across a packet network. Typically, the output from the packetisation device is a "stream" of related packets with each individual packet containing sufficient information to enable the end users to reproduce a small time fragment of the original root content. This is called the primary packetised content stream as it is the originating source of packets from the root.

Only a single copy of the primary packetised root content stream is emitted from the packetisation device. However, the number of end users wishing to receive a copy of the packetised stream may be large and may be geographically distributed across the area, city, country or the world.

In order for each of the end users to receive a copy of the primary packetised content stream, a multicast packet distribution network could be deployed to interconnect each end user with the root content source. Today the Internet's MßONE is an example of one such world wide multicast distribution network.

The muticast packet distribution network is a hierarchical arrangement of packet routing devices. The hierarchy is optimised for each multicast stream. Each packet routing device systematically receives at least one copy of the packetised content stream and then duplicates and forwards copies of the packetised content stream towards other packet routing devices or to end users.

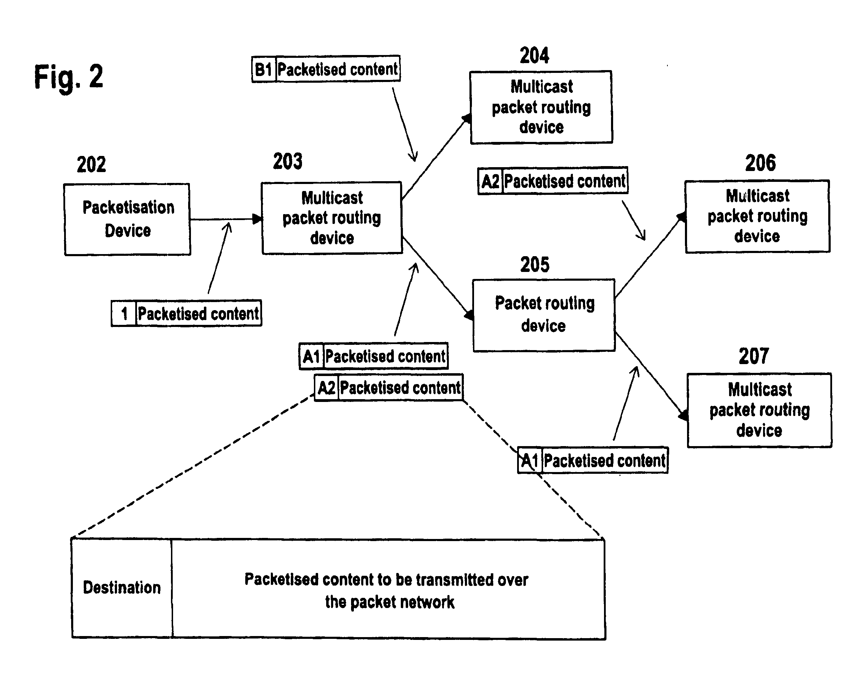

Figure 2 shows an example of packet distribution efficiency. In Figure 2, a packetization device, 202 sends packetized content in a packet having an address header and content container to a multicast packet routing device, 203. The routing device 203 distributes the stream to a first subordinate routing device, 204, in the form of packet headed B1 and a second subordinate routing device, 205, in the form of packets headed A1 and A2. Router 205 redistribute the streams headed A1 and A2 to further subordinate routers, 206 and 207 respectively.

The multicast packet distribution network is said to be efficient if it is configured to duplicate the packet streams as close as possible to the end users. A simple test for efficiency on any particular network connection is to determine whether there is only one copy of the packetised content stream being transmitted across that link. If there is more than one copy of the stream, the distribution is said to be inefficient.

In Figure 2, it is clear that there is one link carrying both and "A1" copy and an "A2" copy of the stream and thus this link is inefficient. This situation is bound to arise if the following packet routing device cannot intrinsically perform a packet duplication operation. In such cases, all packet duplication needs to be performed in the prior multicast packet routing device and the non-duplicating packet router is left with the diminished responsibility for simply routing each copy to its required egress interfaces.

The consequence of packet stream distribution inefficiency is that additional network transmission resources are required to distribute the packetised content stream compared with the efficient case.

Each network transmission link has a finite and fixed capacity. When the first packet stream is configured to be transported by a particular transmission link, an amount of capacity equal to the capacity required by the packet stream will be "consumed" by the stream leaving the transmission link "partially filled". Additional copies of the packet stream can be conveyed by the transmission link and with each additional copy, the transmission link will become more and more "filled".

Because the transmission link has a finite capacity, only a finite number of copies of the packet stream can be carried on the link before the link is "completely filled". As the link approaches the point of complete fill, it is said to be "congested" and when the link is completely filled, it is said to be "blocked" for additional connections.

It follows that the lower the efficiency of distribution, the greater transmission capacity will be required. It also follows that the lower the efficiency of distribution, the fewer the maximum number of end users will be that can receive a copy of the packet stream.

Although there are many packet based communication protocol which have been implemented and deployed, the Internet Protocol (IP) has emerged as the dominant protocol for packet based networks.

Today's Internet hosts many distributive multicast services but as a proportion of overall Internet traffic, the distributive services are but a small fraction. One of the key historical reasons which has ensured that distributive services have remained a minor proportion of overall traffic is that most types of distributive service require a constant stream of packet delivery in a timely manner at a high rate compared with the sizes of typical end user Internet access connections.

Because the proportion of multicast services has been relatively small to date, the effects of inefficient delivery of these services has had little impact on the overall utilisation and use of the Internet transmission facilities. Specifically, because Internet access speeds have traditionally been too low to allow the implementation of practical video and audio distributive services, these services have not been developed and deployed.

However a clear trend has emerged that with the much higher capacity end user connections which are now available for Internet access services (including ADSL, IDSL, SDSL, HDSL, VDSL, cable modems and many others), IP based distributive services are becoming more feasible and available to a larger audience. An increasing number of broadcast radio stations in the world are streaming their programmes onto the Internet (as an example, see (http://www.broadcast.com/radio) and companies such as Coolcast are streaming pay-TV like video streams onto the Internet (see http://www.coolcast.com).

Therefore, IP Multicast has now established itself a key driver for the delivery of new types of end user services and has been enabled by the new high speed Internet access technologies.

There are many high-speed access technologies (mentioned above) and many products have been developed and deployed around the world based on these technologies. The growth in deployment is progressing at an explosive rate and the installation rate of new high speed Internet access lines is expected to compound severalfold each year for the next several years.

Although these high speed access technologies are predominately being deployed for the delivery of high speed Internet access, the access node platforms themselves are generally designed to operate at a protocol layer below the IP layer. One reason for this is that the different standards specifically dealing with access technologies generally cover only the Physical and the Medium Access Control functions but do not specify the transport of IP. Other standards, such as the Internet RFCs, provide recommendations about how to carry IP packets over the access transport technologies.

The consequence of deploying access node devices which operate below the IP layer is that the task of IP packet duplication for supporting distributive packet services must be performed in a device other than the access node. This in turn means that multiple copies of the same multicast packet stream may be required on the access node's transmission link and therefore within the access node's internal bus connections. It is clear that a multicast network configuration as described above cannot "efficiently" deliver multicast services through an access node which operates below the IP layer and accordingly, the number of end users simultaneously receiving a multicast feed will be limited because of congestion and blocking. Indeed, non-multicast services such as traditional World Wide Web access may be also affected by congestion and blocking.

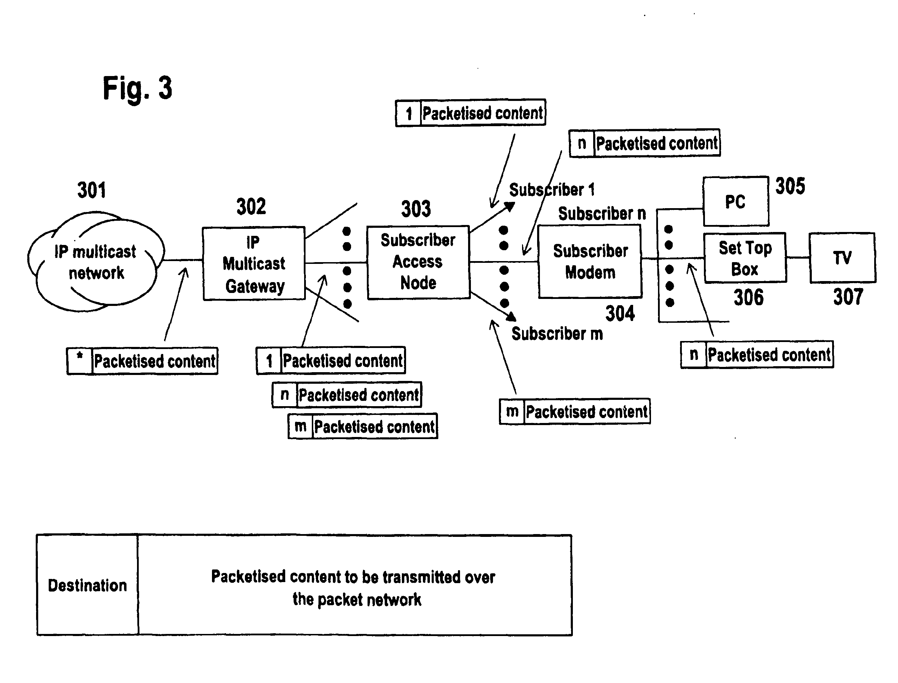

Figure 3 shows a typical network arrangement for delivering IP multicast streams to end subscribers through a high-speed access node. An IP multicast network, 301, sends packetized content to an IP multicast gateway, 302.Gateway 302 serves a plurality of Subscriber Access Nodes, 303, each of which in turn serves a plurality of subscriber terminations such as modems, 304. The subscriber modem may connect a plurality of subscriber equipments, 305, 306, etc to the network.

In Figure 3, the access node has a logically separate connection to each subscriber. When the access technology is one of the xDSL technologies, the logical topology generally corresponds with the physical topology. When the access technology is one of the Hybrid Fibre Coax, Satellite technologies and related "broadcast" technologies, this logical topology is implemented over an access arrangement which is usually point to multipoint.

Assuming that the IP multicast network is implemented efficiently, a single copy of a packetised content stream will be delivered from the IP multicast network towards the "last" IP multicast gateway. In the diagram, this stream is marked with a destination of "*" to show that the packet is yet to be duplicated for the last time.

Because the subscriber access node in this example is not IP aware, it falls upon the last multicast gateway to duplicate the multicast stream towards each connected end user. On the link towards the Subscriber Access Node therefore, a separate copy of the packetised multicast content stream will be addressed to each connected subscriber and the link will be inefficiently utilised.

The capacity of the Subscriber Access Node links towards IP multicast gateways vary around the world. They are today typically provisioned with STM-1 / OC3c (approx. 150 Mbit/s), DS3 (approx. 45 Mbit/s), E3 (approx. 33 Mbit/s) or n x DS1 / E1 (up to approx. 6 / 8 Mbit/s) capacity. The number of subscribers served from each access node also varies. In the smallest available nodes, fewer than ten subscribers are supported. In the largest available nodes (and combinations of nodes appearing to be a single large node), up to 10,000 or more subscribers are supported. Typically, today's nodes are configured for between 50 and 1000 subscribers and ongoing high service roll out rates are expected to increase the typical node sizes to between 500 and 10,000 subscribers within the next two years.

The typical capacity of a broadcast quality multicast video stream is between around 1.5 Mbit/s and 6 Mbit/s. It is therefore clear that the subscriber access node network links will reach congestion and become blocked with only a relatively small proportion of the overall number of end users taking a multicast video feed. Because access network providers (and their end users) do not generally consider a high risk of congestion and blocking acceptable, the likely outcome is that such multicast services will not be offered or supported by the access network provider's last gateway.

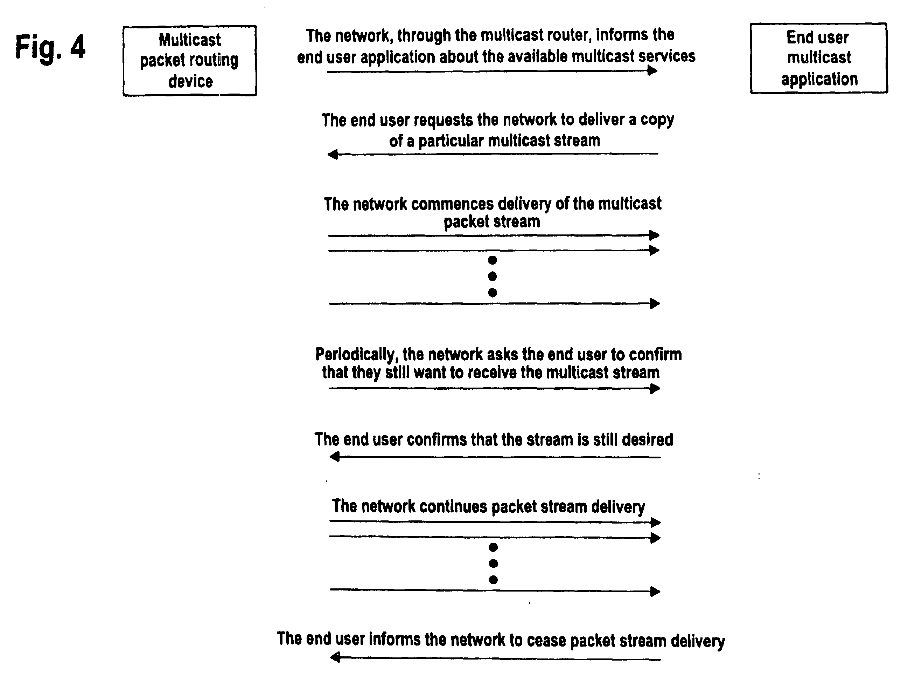

Figure 4 is a flow diagram showing an example of a control and information exchange during a typical IP multicasting session.

Initially, the end user needs to discover what multicasting services are available to it through the multicast packet routing device. There are many different ways that this information can be convey to the end user application. The method of discovery does not materially affect the following information flow.

The end user initiates a multicast connection by requesting the multicast packet routing device to forward a particular multicast flow. After possibly needing to find a copy of the requested multicast flow from elsewhere in the network, the multicasting packet router will forward a copy of the multicast flow to the requesting user (if the flow was not already being sent towards the user).

From the end user's perspective, this can be considered to be "join in progress": the root content source may have been streaming the multicast flow into the network for a considerable period of time beforehand, but for all intensive purposes, the newly attached end user is not concerned with the packets which have been sent in the past. The newly attached user starts to receive the packets that the root content source has recently been streaming.

Periodically, the multicast packet routing device will poll the end user to check if the multicast stream is still required. The end user is expected to acknowledge this request promptly. If the multicast packet routing device fails to receive a certain number of poll acknowledgements, it will assume that the multicast stream is no longer required and cease duplicating and forwarding that stream to that end user.

Also, the end user can voluntarily inform the multicast packet router at any stage that the multicast stream is no longer required. In this case too, the multicast packet router will cease duplicating and delivering the packet stream towards the end user.

It is clear from this description of the typical operation of an IP multicast session, that there is a bi-directional control requirement in order to support the unidirectional multicast information stream. The same multicast flow can be delivered to many end users but each end user has a private control flow back towards their multicast packet router.

The bi-directional control requirement is specifically contrary to the normal operation of multicasting capabilities of transport technologies such as ATM, which is extensively used as a transport.technology in xDSL networks.

In a typical ATM based xDSL access network, a connection between an end user and a multicast packet router is generally configured by administrative actions. The resulting connection is considered to be semi-permanent in the sense that the connection will remain active until another administrative action is taken to clear it. The ATM protocol supports two different types of connection:
- a point to point class of connection in which there are two clearly defined end points and the information flow is usually bi-directional.
- a point to multipoint class of connection in which there is one clearly defined "root" and from one to many clearly defined "leaves". The information flow in a point to multipoint connection is always unidirectional from the root towards the leaves.

The difficulty in using ATM to transport IP based multicast flows is now apparent: the information component of an IP multicast flow follows the ATM model of a point to multipoint connection but the control component of an IP multicast flow follows the ATM model of a point to point connection. In today's network, the known techniques for mapping the IP multicast connections onto the underlying ATM infrastructure are either (a) not scalable to support hundreds, thousands or tens of thousands of end users in large scale public access networks (b) not compatible with the features and capabilities deployed in large scale public access networks or (c) undesirable because of increased complexity in configuration and / or management.

### Disclosure of the invention

In today's art, when a multicast stream needs to be transmitted to more than one subscriber connected to the same subscriber access node, the packets in the stream must be duplicated at the network's last IP router / gateway and then sent as separate non-multicast streams to each connected subscriber.

If the access node to which the subscriber is connected is intrinsically able to support IP multicast traffic at all its internal switching and multiplexing points, the duplication of multicast streams can take place at the end user's line termination and the efficiency of an IP based service will be assured.

However, the vast majority of present day access nodes supporting Internet access are not themselves IP devices. Typically they operate at a layer below the IP such as at the ATM layer or Frame Relay layer.

Often, the underlying transport layer has its own mechanisms for supporting multicast services. In the case of ATM, this mechanism is called point to multipoint. However, the service model assumptions underlying ATM's point to multipoint capabilities are fundamentally different from the service model architecture assumed by IP. In ATM, point to multipoint connections are intrinsically unidirectional and in IP, multicast connections require an ongoing bi-directional control dialogue to initiate and maintain the IP multicast service.

So even when the underlying transport mechanism supports its own efficient point to multipoint mechanisms, these efficiencies cannot be directly realised if the IP multicast service does not map onto the transport mechanism's multipoint service.

The invention described here is a method for configuring a cell or packet based access node and IP gateway which support unidirectional or bi-directional point to point and unidirectional point to multipoint transport connections so that these transport features can be used to efficiently provide IP multicast services to end users. The invention will be described specifically in the context of an underlying ATM transport but is generally applicable in contexts of other underlying cell and packet protocols with similar connection oriented service characteristics as supported by ATM. The disclosed method provides an efficiency and scalability advantage when compared with the described present day implementations when the point at which packet or cell duplication would take place is at a network location closer to the end users than the location of the last IP multicasting router.

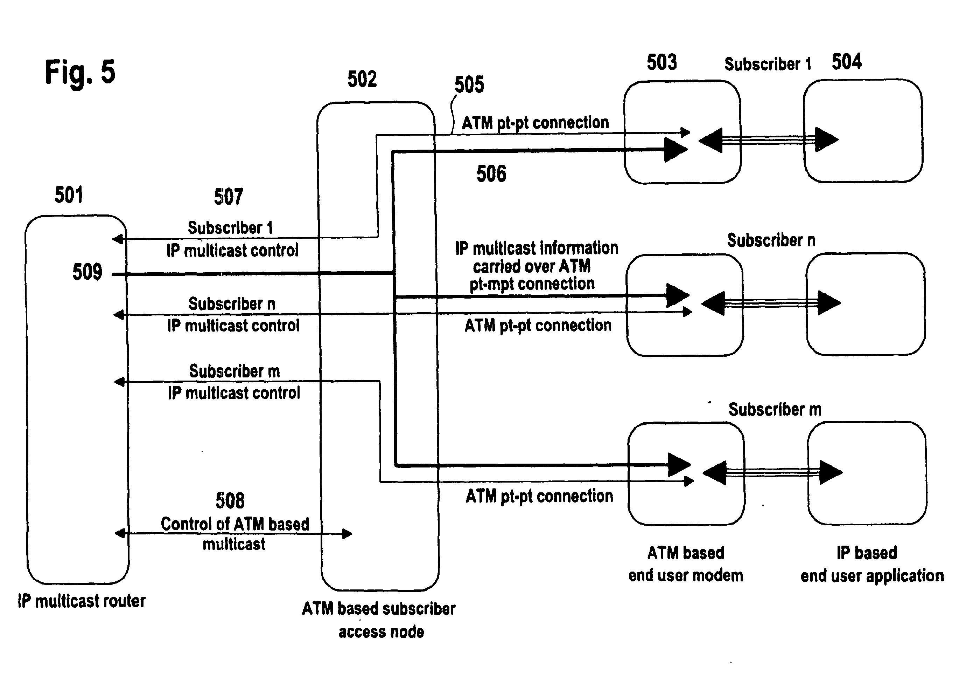

Figure 5 shows an IP multicast packet routing device, 501, an ATM based subscriber access node, 502, and several end user modems, 503, and applications, 504, wanting to receive a common IP multicast feed.

At the IP layer, the multicast information packets are normally transported in the same channel that carries the multicast control packets. The method disclosed in this invention uses specially defined packet forwarding rules at the end user modem and at the IP multicast router to allows the information and control flows to be separated, conveyed over the appropriate type of ATM connection.

In the direction from the IP multicast router towards the end user, the IP multicast router has two connections towards each subscriber:
- a shared point to multipoint connection, 509, on which the multicast information flow will be transmitted
- and a dedicated point to point connection, 507, for each end user on which all other IP traffic will be transmitted.
- The ATM based multicast is controlled via link 508.
- When an IP multicast information packet arrives at the IP multicast router destined towards end users, the IP multicast router forwards a single copy of the packet into the shared point to multipoint connection. The responsibility for duplicating the packet is placed onto the underlying ATM infrastructure.

When the IP multicasting router needs to send a multicast control packet towards the end user, or when another non multicast IP packet arrives at the router destined for that same end user, these packets are forwarded using the dedicated point to point connection towards the end user.

Two different ATM connections arrive at the end user's modem from the ATM network: the point to multipoint termination and the point to point termination. The end user's modem requires sufficient functionality to receive packets on each of these terminations and to multiplex the packets before forwarding them towards the end user's IP applications. Typically, the interface from the end user's modem towards the IP applications are based on standards such as 10/100 Ethernet, Universal Serial Bus, ATM-25 and a range of others.

In the reverse direction from the end user towards the IP multicast router, the IP multicast control traffic and all other types of traffic can be transported using the reverse direction of the dedicated point to point connection.

At any instance in time, any of the end users connected to the IP multicast packet routing device may be receiving the multicast information flow or not. Also, the end users may independently request receipt of or request disconnection from the multicast flow at any time. As end users request receipt and request disconnection, the IP multicast packet router uses its "control of ATM based multicast" connection to the subscriber access node to direct the subscriber access node to activate or deactivate the transport layer point to multipoint leaf connections towards the specific end users.

When the final end user chooses to volunteer disconnection from the multicast IP flow, the IP multicast packet routing device may, at its discretion, stop streaming the IP multicast information packets towards that end user's access node. If an end user again requests receipt of that multicast information flow and the IP multicast packet routing device had previously ceased sending information packets towards the subscriber access node, it will first need to recommence its transmission of the multicast information flow and then direct the subscriber access node to join the requesting subscriber to the new multicast tree.

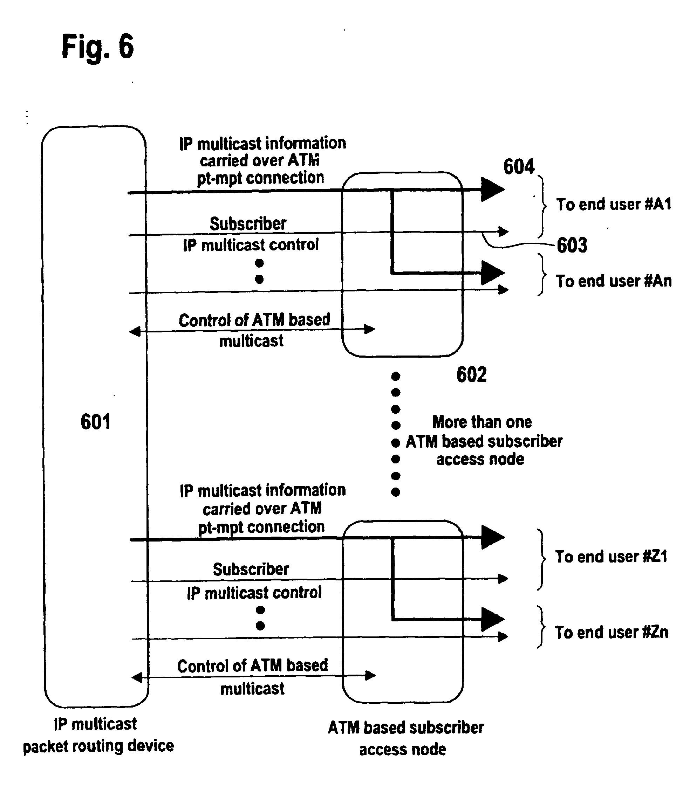

In many cases, the IP multicast packet routing device will support more than one interface towards possibly more than one subscriber access node as shown in Figure 6. The arrangement in Fugure 6 includes IP multicast router, 601, and ATM based subscriber access nodes, 602. In this case, a separate shared point to multipoint connection must be provisioned on each of the subscriber access node interfaces and the multicasting router will need to duplicate separate instances of the multicast information packets and forward these into each of the point to multipoint connections.

In the more generalised case where the IP multicast router has more than one IP multicast stream available for the end users, a possible arrangement includes a mixture of:
- End users wanting to receive one particular multicast stream
- End users wanting to receive any of the other available multicast streams
- End users not wanting to receive any multicast stream

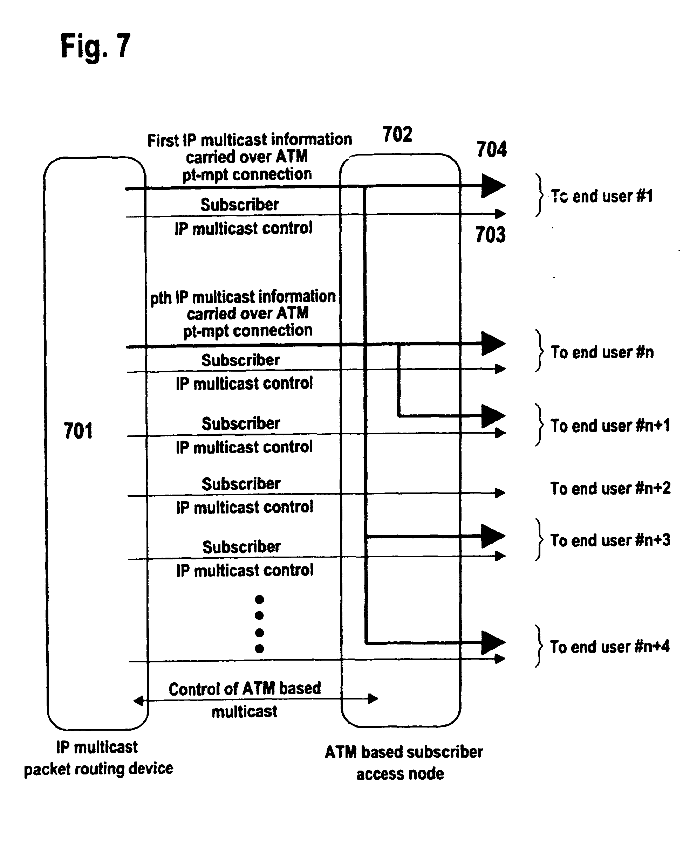

In this more generalised case, each end user will retain a single dedicated point to point link for all non-multicast information traffic as shown in Figure 7. In this example, p different multicast flows are delivered towards the subscriber access node towards n+4 end users.

Each possible multicast stream is transported on a dedicated point to multipoint connection. However, a separate and dedicated point to multipoint information connection needs to be provided between the IP multicast packet routing device and the each subscriber access node.

As shown in Fig 7, "p" IP multicast streams from the IP multicast packet routing device, 701, are available for each subscriber via the ATM based subscriber access node, 702. Each of these "p" streams is carried over an ATM point-to-mutipoint connection. The end user can select one of the "p" multicast streams.

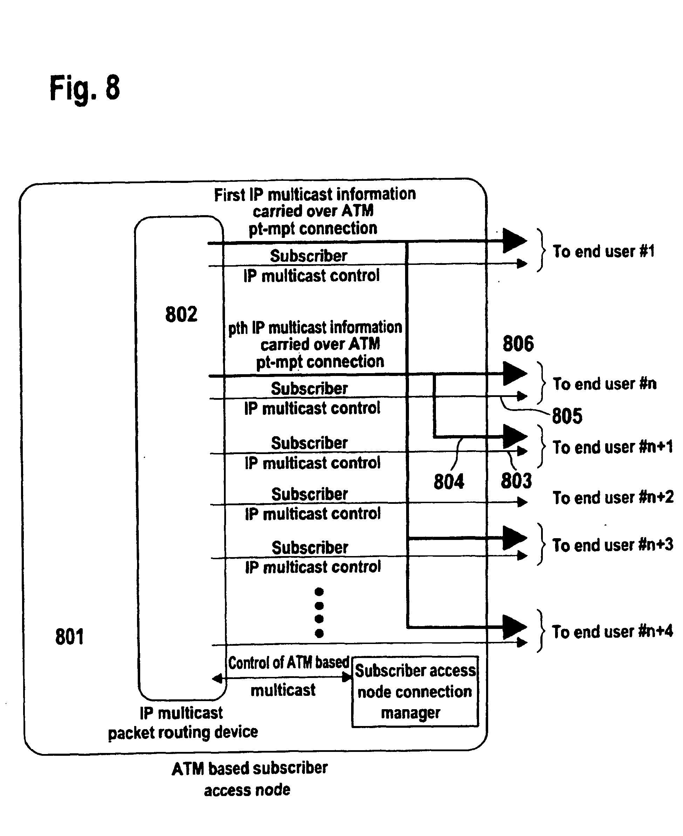

In yet another embodiment of the invention, the IP multicast packet routing device could be implemented within a non-IP based access node as shown in Figure 8. A specific example of such an embodiment could be a subscriber access node, 801, which uses ATM as the internal communication mechanism but includes a plug-in IP multicast packet routing device, 802, which performs a similar function to that of an external IP multicast packet routing device. A subscriber access node connection manager, 807, controls the ATM based multicast in cooperation with thew subscriber IP multicast control link.

Older solutions do not use the transport layer multicasting capabilities (eg. ATM) of the subscriber access node. Different end users must each receive a different copy of the multicast information flow.

Typical link capacities between the IP multicast packet routing device and the subscriber access node are: STM-1 / OC3c (approx. 150 Mbit/s), DS3 (approx. 45 Mbit/s), E3 (approx. 33 Mbit/s) or n x DS1 / E1 (up to approx. 6 / 8 Mbit/s) capacity.

The typical capacity of a broadcast quality multicast video stream is between around 1.5 Mbit/s and 6 Mbit/s. It is clear then that the old solution cannot support more than around 100 simultaneous end user multicast sessions even with the highest capacity interface and the lowest capacity video stream.

The new solution is more efficient because only a single copy of each streaming channel is delivered to the subscriber access node. This allows the new solution to support a very large number of simultaneous end user multicast sessions. The new approach allows all end users to simultaneously receive a multicast information feed, even when the number of end users in the subscriber access node is many thousands or more.

The invention is also applicable to the case where a dedicated point-to-point link is used to control an arbitrarily large number of dedicated point-to-multipoint links, so the end user can receive more than one multicast system. In this case, the subscriber accesses a single point-to-point link and multiple point-to-multipoint links.

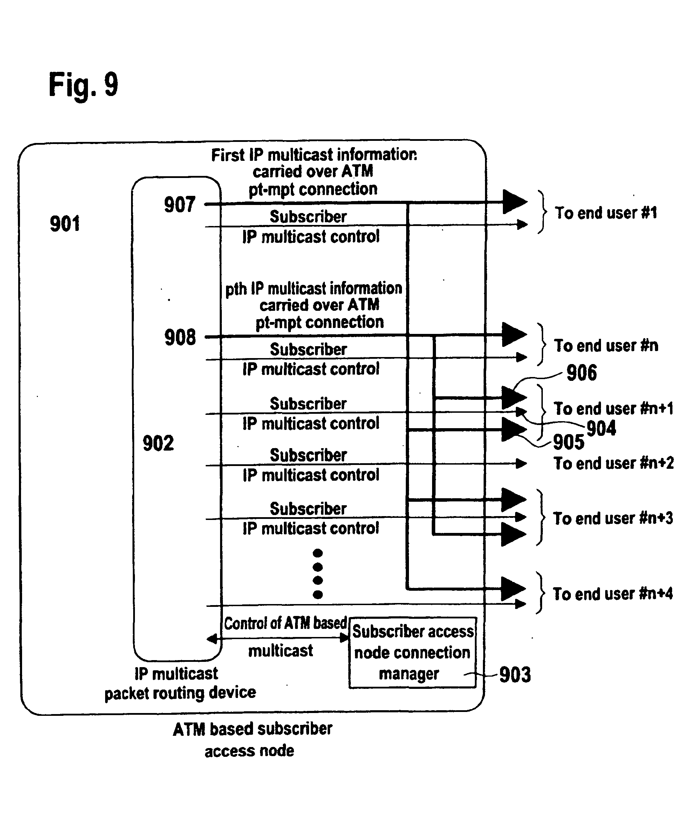

In a further generalised case, each end user will have a capability of selecting more than one multicast flow as shown in Figure 9. Each end user retains a single point to point control connection, 904, and signals towards the IP multicast packet routing device, 902, to obtain or disconnect from any of the available "p" multicast streams, 907, 908. In Figure 9, users "n+1" and "n+2" have selected to receive the first and "pth" multicast streams, 907, 908, simultaneously and subject to service policy, available capacity on the subscriber connection and possibly other constraints, any of the other multicast streams available at the ATM based subscriber access node may also be selected.

An example of this is as follows. Consider that the example commences with the end user in a state in which no multicast connections have been requested and none are being received. In Figure 9, end user "n+2" is in this state. The end user may then signal a preference to receive the first multicast stream using the dedicated point to point control channel. When the IP multicast packet routing device grants the request, the appropriate connections are created within the ATM based subscriber access node and the stream is delivered. The end user is now in the state shown by the first end user in Figure 9.

The end user may then signal a second time indicating a preference to receive the "pth" multicast stream. The IP multicast packet routing device and the ATM based subscriber access node must perform checks to verify that the end user is capable of simultaneously receiving the second multicast stream. When the connection is established the end user will be in the state shown by end user "n+3" in figure 9.

The end user may continue to signal towards the multicast packet routing device to either attach to more multicast streams or to detach from one of the previously attached streams.

Thus if the end user in the example were to now signal indicating a preference to detach from the first multicast stream, if and when the action is taken to detach the end user, they would be in the state indicated by end user "n" in Figure 9.

## Claims

1. A method of providing bi-directional communication in a broadcast enabled network (301), **characterized by** the steps of implementing packet or cell forwarding rules at end user equipments (305, 306) and at a multicast router (205), to enable the separation of downstream and bi-directional or unidirectional upstream flows, wherein unidirectional flows pass from the router (205) to an access node (303) as a single stream and are replicated in the access node (303) for transmission over individual paths to the end user equipments (305, 306), and wherein individual bi-directional flows are relayed between the router (205) and end user equipments (305, 306) as individual flows via the access node (303).

2. A method as claimed in claim 1, in which the rules separate the flows into:
- one or more shared point-to-multipoint connections on which unidirectional multicast information flow is transmitted;
- a dedicated point-to-point connection for each end-user equipment on which other traffic is transmitted.

3. A method as claimed in claim 1 or 2, wherein the information flow is carried on an ATM point to multipoint connection and wherein bi-directional and control flows are carried on an ATM point-to-point connection.

4. A method as claimed in any one of claims 1 to 3, wherein the network is a point-to-multipoint enabled network including:
- a multicast router;
- a plurality of end-user communication equipments; and
- a cell or packet based access node and IP gateway supporting bi-directional point-to-point and unidirectional point-to-multipoint transport connections, interposed between the router and the end-user communication equipments.
the method including:
- implementing packet forwarding rules at the end user communication devices and at the IP multicast router to allow the separation of unidirectional and bi-directional flows.

5. A method as claimed in any one of claims 1 to 4, wherein unidirectional flows between the router and the user equipments are point-to-multipoint ATM flows.

6. A method as claimed in any one of claims 1 to 5 wherein control flows and bi-directional flows are transmitted between the user equipments and the router as point-to-point ATM flows.

7. A method as claimed in any one of claims 1 to 6 wherein the router is an IP multicast router.

8. A point-to-multipoint enabled network (301) including:
- a multicast router (205); and
- a plurality of end user communication equipments (305, 306);
- a cell or packet based access node (303) supporting bi-directional point-to-point and unidirectional point-to-multipoint transport connections interposed between the router (205) and the end user communication equipments (305, 306);
**characterized by**
- means for passing unidirectional flows from the router (205) to the access node (303) as a single stream and for replicating them in the access node (303) for transmission over individual paths to the end user equipments (305, 306); and
- means for relaying individual bi-directional flows between the router (205) and end user equipments (305, 306) as individual flows via the access node (303);
wherein, packet forwarding rules control the end user equipments (305, 306) and the multicast router (205), in order to enable the separation of unidirectional and bi-directional flows.

## Revendications

1. Procédé destiné à fournir une communication bidirectionnelle dans un réseau de diffusion (301), **caractérisé par** les étapes de mettre en oeuvre des règles de transfert de paquet ou de cellule au niveau d'équipements d'utilisateur final (305, 306) et au niveau d'un routeur de multidiffusion (205), pour permettre la séparation de flots descendants et montants bidirectionnels ou unidirectionnels, dans lequel les flots unidirectionnels passent depuis le routeur (205) vers un noeud d'accès (303) comme un flux unique et sont répliqués dans le noeud d'accès (303) pour une transmission sur des chemins individuels vers les équipements d'utilisateur final (305, 306) et dans lequel des flots bidirectionnels individuels sont relayés entre le routeur (205) et les équipements d'utilisateur final (305, 306) comme des flots individuels par l'intermédiaire du noeud d'accès (303).

2. Procédé selon la revendication 1, dans lequel les règles séparent les flots en :
- une ou plusieurs connexions point à multipoint partagées sur lesquelles un flot d'informations de multidiffusion unidirectionuel est émis ;
- une connexion point à point dédiée pour chaque équipement d'utilisateur final sur lequel un autre trafic est émis.

3. Procédé selon la revendication 1 ou 2, dans lequel le flot d'informations est transporté sur une connexion point à multipoint ATM et dans lequel des flots bidirectionnels et de commande sont transportés sur une connexion point à point ATM.

4. Procédé selon l'une quelconque des revendications 1 à 3, dans lequel le réseau est un réseau point à multipoint comprenant :
- un routeur de multidiffusion ;
- une pluralité d'équipements d'utilisateur final ; et
- un noeud d'accès basé sur cellule ou paquet et une passerelle IP supportant des connexions de transport point à point bidirectionnelles et point à multipoint unidirectionnelles, intercalés entre le routeur et les équipements de communication d'utilisateur final,
le procédé comprenant l'étape de :
- mettre en oeuvre des règles de transfert de paquet au niveau des dispositifs de communication d'utilisateur final et au niveau du routeur de multidifrusion IP pour permettre la séparation des flots unidirectionnels et bidirectionnels.

5. Procédé selon l'une quelconque des revendications 1 à 4, dans lequel les flots unidirectionnels entre le routeur et les équipements d'utilisateur sont des flots ATM point à multipoint.

6. Procédé selon l'une quelconque des revendications 1 à 5, dans lequel les flots de commande et les flots bidirectionnels sont émis entre les équipements d'utilisateur et le routeur comme des flots ATM point à point.

7. Procédé selon l'une quelconque des revendications 1 à 6, dans lequel le routeur est un routeur de multidiffusion IP.

8. Réseau point à multipoint (301) comprenant :
- un routeur de multidiffusion (205) ; et
- une pluralité d'équipements de communication d'utilisateur final (305, 306) ;
- un noeud d'accès basé de cellule ou de paquet (303) supportant des connexions de transport point à point bidirectionnelles et point à multipoint unidirectionnelles intercalé entre le routeur (205) et les équipements de communication d'utilisateur final (305, 306) ;
**caractérisé par**
- des moyens destinés à transmettre des flots unidirectionnels depuis le routeur (205) vers le noeud d'accès (303) comme un flux unique et pour les répliquer dans le noeud d'accès (303) pour une émission sur les chemins individuels vers les équipements d'utilisateur final (305, 306) ; et
- des moyens destinés à relayer des flots bidirectionnels individuels entre le routeur (205) et les équipements d'utilisateur final (305, 306) comme des flots individuels par l'intermédiaire du noeud d'accès (303) ;
- dans lequel des règles de transfert de paquet commandent les équipements d'utilisateur final (305, 306) et le routeur de multidiffusion (205), pour activer la séparation de flots unidirectionnels et bidirectionnels.

## Patentansprüche

1. Verfahren des Bereitstellens der bidirektionalen Verbindung in einem mehrfachsendefähiges Netzwerk (301), **gekennzeichnet durch** die Schritte des Implementierens von Paket- oder Zellweiterleitungsregeln auf Teilnehmerendgeräten (305, 306) und auf einem Mehrfachsenderouter (205), um die Trennung der Downstreamflüsse und der bidirektionalen oder unidirektionalen Upstreamflüsse zu ermöglichen, in welchem die unidirektionalen Flüsse von dem Router (205) an einen Zugriffsknoten (303) als ein einzelner Strom weitergeleitet werden und in dem Zugriffsknoten (303) zur Übertragung über einzelne Wege an die Teilnehmerendgeräte (305, 306) repliziert werden, und in welchem einzelne bidirektionale Flüsse zwischen dem Router (205) und den Teilnehmerendgeräten (305, 306) als einzelne Flüsse über den Zugriffsknoten (303) weitergesendet werden.

2. Verfahren nach Anspruch 1, in welchem die Regeln die Flüsse trennen in:
- eine oder mehr gemeinsame Punkt-zu-Mehrpunkt-Verbindungen, auf welchen der unidirektionale Mehrfachsende-Informationsfluß gesendet wird;
- eine dedizierte Punkt-zu-Punkt-Verbindung für jedes Endbenutzergerät, auf welcher anderer Verkehr gesendet wird.

3. Verfahren nach Anspruch 1 oder 2, in welchem der Informationsfluß auf einer ATM-Punkt-zu-Mehrpunkt-Verbindung übertragen wird und in welchem bidirektionale Flüsse und Steuerflüsse auf einer ATM-Punkt-zu-Punkt-Verbindung übertragen werden.

4. Verfahren nach einem der Ansprüche 1 bis 3, in welchem das Netz ein Punkt-zu-Mehrpunkt-fähiges Netz ist, das umfaßt:
- einen Mehrfachsenderouter;
- eine Mehrzahl von Endbenutzer-Kommunikationsgeräten; und
- einen Zell- oder Paket-basierten Zugriffsknoten und IP-Gateway, die bidirektionale Punkt-zu-Punkt- und unidirektionale Punkt-zu-Mehrpunkt-Transportverbindungen unterstützen, die zwischen dem Router und den Endbenutzer-Kommunikationsgeräten zwischengeschaltet sind.
wobei das Verfahren umfaßt:
- das Implementieren von Paketweiterleitungsregeln auf den Endbenutzer-Kommunikationsgeräten und auf dem IP-Mehrfachsenderouter, um die Trennung der unidirektionalen und der bidirektionalen Flüsse zu ermöglichen.

5. Verfahren nach einem der Ansprüche 1 bis 4, in welchem die unidirektionalen Flüsse zwischen dem Router und den Benutzergeräten Punkt-zu-Mehrpunkt-ATM-Flüsse sind.

6. Verfahren nach einem der Ansprüche 1 bis 5, in welchem die Steuerflüsse und die bidirektionalen Flüsse zwischen den Benutzergeräten und dem Router als Punkt-zu-Punkt-ATM-Flüsse gesendet werden.

7. Verfahren nach einem der Ansprüche 1 bis 6, in welchem der Router ein IP-Mehrfachsenderouter ist.

8. Punkt-zu-Mehrpunkt-fähiges Netz (301), das umfaßt:
- einen Mehrfachsenderouter (205); und
- eine Mehrzahl von Endbenutzer-Kommunikationsgeräten (305, 306);
- einen Zell- oder Paket-basierten Zugriffsknoten (303), der bidirektionale Punkt-zu-Punkt- und unidirektionale Punkt-zu-Mehrpunkt-Transportverbindungen unterstützt, die zwischen dem Router (205) und den Endbenutzer-Kommunikationsgeräten (305, 306) zwischengeschaltet sind;
**gekennzeichnet durch**
- Einrichtungen zum Weiterleiten unidirektionaler Flüsse von dem Router (205) an den Zugriffsknoten (303) als einen einzelnen Strom und zu ihrem Replizieren in dem Zugriffsknoten (303) zur Übertragung über einzelne Wege an die Teilnehmerendgeräte (305, 306); und
- Einrichtungen zum Weitersenden einzelner bidirektionaler Flüsse zwischen dem Router (205) und den Teilnehmerendgeräten (305, 306) als einzelne Flüsse über den Zugriffsknoten (303);
- ein Paket, in welchem Weiterleitungsregeln die Teilnehmerendgeräte (305, 306) und den Mehrfachsenderouter (205) steuern, um die Trennung der unidirektionalen und der bidirektionalen Flüsse zu ermöglichen.
